# EUROPÄISCHE PATENTSCHRIFT

(11) **EP 1 248 954 B1**
(45) Veröffentlichungstag und Bekanntmachung des Hinweises auf die Patenterteilung: **07.01.2004**
(21) Anmeldenummer: 00984859.9
(22) Anmeldetag: 25.10.2000
(51) Int. Cl.: G01S 13/00

(54) **KRAFTFAHRZEUG-RADARSYSTEM**
AUTOMOTIVE RADAR SYSTEM
SYSTEME RADAR POUR VEHICULE AUTOMOBILE

(30) Priorität: 24.12.1999 DE 19963003
(43) Veröffentlichungstag der Anmeldung: 16.10.2002
(73) Patentinhaber: ROBERT BOSCH GMBH, 70442 Stuttgart (DE)
(72) Erfinder: SCHMIDT, Ewald, 71634 Ludwigsburg (DE); VOIGTLAENDER, Klaus, 73117 Wangen (DE)
(86) Internationale Anmeldenummer: PCT/DE2000/003760
(87) Internationale Veröffentlichungsnummer: WO 2001/048509

(56) Entgegenhaltungen:
- DE-A- 2 551 366
- DE-A- 3 137 816
- DE-A- 19 644 164
- DE-A- 19 724 320

## Beschreibung

Die vorliegende Erfindung betrifft ein Kraftfahrzeug-Radarsystem nach den Oberbegriff der nebengeordneten Ansprüche. Solche Kraftfahrzeug-Radarsysteme werden beispielsweise im Rahmen einer automatischen Geschwindigkeitsregelung eines Fahrzeugs zur Detektion vorausfahrender Fahrzeuge eingesetzt. Ein gattungsgemäßes System wird auch als Adaptive Cruise Control (ACC) bezeichnet. Zur Beeinflussung der verwendeten elektromagnetischen Wellen und mitunter auch zum Schutz des Radarsystems vor Witterungseinflüssen befindet sich üblicherweise ein Körper im Strahlengang der elektromagnetischen Wellen. Häufig ist dieser Körper Bestandteil eines Gehäuses, das ein solches Kraftfahrzeug-Radarsystem umgibt.

### Stand der Technik

Aus der DE 196 44 164 C2 ist ein Kraftfahrzeug-Radarsystem mit mindestens einem Sende-/Empfangselement zum Senden und/oder Empfangen elektromagnetischer Wellen, wobei sich zur Fokussierung oder Streuung der elektromagnetischen Wellen ein linsenförmiger dielektrischer Körper im Strahlengang des mindestens einen Sende-/Empfangselements befindet, bekannt. Der linsenförmige dielektrische Körper, der zudem das Sende-/Empfangselement vor Witterungseinflüssen schützt, besitzt eine Anordnung aus elektrisch leitfähigen Bahnen, deren Breite maximal Lambda-Zehntel beträgt und deren Abstände voneinander mindestens Lambda-Viertel betragen, wobei Lambda die Freiraumwellenlänge der elektromagnetischen Wellen bezeichnet. Die elektrisch leitfähigen Bahnen sind dabei überwiegend senkrecht zur Polarisationsrichtung der elektromagnetischen Wellen angeordnet. Die Anordnung aus elektrisch leitfähigen Bahnen kann je nach gewünschter Anwendung auf der Innenseite des dielektrischen Körpers, d.h. der Seite, die den Sende-/Empfangselementen zugewandt ist, der Außenseite oder auch innerhalb des dielektrischen Körpers angeordnet sein. Wenn die elektrisch leitfähige Anordnung von einem Heizstrom durchflossen wird, kann auf diese Weise der dielektrische Körper von Belägen wie Eis, Schnee oder Schneematsch befreit werden. Ebenso kann mit Hilfe eines Heizstroms der dielektrische Körper getrocknet oder trocken gehalten werden. Es wird weiterhin offenbart, daß die Möglichkeit besteht, die elektrisch leitfähige Anordnung in mindestens zwei voneinander getrennte Anteile zu unterteilen. Wenn sich bei dieser Konstellation die Anordnung aus elektrisch leitfähigen Bahnen auf der Außenseite des dielektrischen Körpers befindet, kann über die Messung der Kapazität zwischen den beiden getrennten Anteilen der Anordnung auf einen sogenannten Verlustwinkel tan δ des Belagsmaterials geschlossen werden. Mit anderen Worten, es kann eine Verschmutzung des dielektrischen Körpers festgestellt werden. In Abhängigkeit von dieser festgestellten Verschmutzung bzw. eines festgestellten Schmutzbelags, kann ein Heizstrom, der die elektrisch leitfähige Anordnung durchfließt, eingeschaltet werden. Andererseits kann durch die Aufteilung in mindestens zwei Bereichen die Heizleistung variiert werden, beispielsweise für ein schnelles Aufheizen einer eisbedeckten Linse mit einer hohen Heizleistung und ein anschließendes Freihalten der Linse mit einer reduzierten Heizleistung. Aus der DE 196 44 164 C2 ist es weiterhin bekannt, daß die elektrischen Leiterbahnen bei einem Körper aus Keramik in bekannter Dickschichttechnologie aufgebracht werden, wo hingegen bei Körpern aus Kunststoff ebenfalls bekannte, kostengünstige Verfahren zum Aufdruck der elektrischen Leiterbahnen verwendet werden können.

Die DE 197 24 320 A1 offenbart ein Verfahren zur Herstellung einer heizbaren Antennenlinse. Es wird eine heizbare Antennenlinse aus einem dielektrischen Körper beschrieben, der darin eine Anordnung aus elektrischen Leiterbahnen besitzt. Die Anordnung aus elektrisch leitfähigen Bahnen befindet sich hierbei möglichst nahe an der zu beheizenden Außenfläche der Linse, wodurch sich eine Verringerung der Heizleistung durch Einbringung der Energie dicht unterhalb der zu beheizenden Fläche ergibt. Ferner folgt daraus ein beschleunigtes Aufheizverhalten. Es wird weiterhin beschrieben, daß eine leichte Anpaßbarkeit der Heizleistung dadurch erreicht werden kann, daß Drähte mit einem gewünschten Widerstandsverhalten verwendet werden. Dies kann beispielsweise ein Widerstandsdraht sein.

Sowohl die DE 196 44 164 C2 als auch die DE 197 24 320 A1 weisen das Problem auf, daß unerwünschte Energie, besonders bei tiefen Frequenzen durch die Antennenlinse ausgestrahlt bzw. eingestrahlt wird.

### Aufgabe, Vorteile und Lösung

Es ist die Aufgabe der vorliegenden Erfindung, ein Kraftfahrzeug-Radarsystem anzugeben, das in Bezug auf die Abschirmwirkung von unerwünschten Energien gegenüber dem Stand der Technik verbessert ist. Hierbei sind mit unerwünschten Energien insbesondere Energien in Frequenzbereichen gemeint, die nicht zum Nutzfrequenzbereich des Kraftfahrzeug-Radarsystems gehören. Diese Aufgabe wird erfindungsgemäß dadurch gelöst, daß bei einem Kraftfahrzeug-Radarsystem mit wenigstens einem sensorstrahlungsdurchlässigen Körper zur Fokusierung der Sensorstrahlung und/oder wenigstens einem Radom ohne gewollte Foukusierung im Strahlengang, wobei in den sensorstahlungsdurchlässigen Körper und/oder in das Radom wenigstens eine Anordnung aus elektrischen Leiterbahnen eingelegt ist, die aus einem ferromagnetischen Material besteht. Der große Vorteil der Verwendung einer Anordnung aus elektrischen Leiterbahnen, die aus einem ferromagnetischen Material bestehen, liegt darin, daß eine gute Abschirmung gegenüber elektrischen und magnetischen Feldern vorhanden ist. Insbesondere niederfrequente Magnetfelder lassen sich auf diese Art und Weise zuverlässig abschirmen. Vorteilhafterweise wird die Anordnung aus elektrischen Leiterbahnen nicht ausschließlich zur Abschirmung verwendet, sondern wird weiterhin wenigstens zum Heizen des sensorstrahlungsdurchlässigen Körpers und/oder des Radoms verwendet, wozu den elektrischen Leiterbahnen eine elektrische Leistung zuführbar ist. Durch diesen erfindungsgemäßen Zusatznutzen läßt sich die Anordnung aus elektrischen Leiterbahnen gleichzeitig zur Abschirmung von elektrischen und magnetischen Feldern und zum Heizen des sensorstrahlungsdurchlässigen Körpers und/oder des Radoms verwenden. Die bevorzugte Ausgestaltung des erfindungsgemäßen Kraftfahrzeugradarsystems sieht vor, daß der sensorstrahlungsdurchlässige Körper als dielektrische Linse ausgebildet ist. Vorteilhafterweise werden die elektrischen Leiterbahnen mäanderförmig und/oder gitterförmig in den sensorstrahlungsdurchlässigen Körper und/oder in das Radom eingelegt. Werden die elektrischen Leiterbahnen hierbei erfindungsgemäß derart dimensioniert, daß sie einen Abstand von wenigstens Lambda-Viertel zueinander aufweisen und eine Breite von maximal Lambda-Zehntel aufweisen, wobei Lambda die Freiraumwellenlänge der Sensorstrahlung ist, so wirkt diese Struktur aus den elektrischen Leiterbahnen für die Nutzsenscrstrahlung nahezu transparent. Insbesondere die erfindungsgemäße Einbringung von gitterförmigen, ferromagnetischen elektrischen Leiterbahnen stellt eine besonders gute Unterdrückung tieferfrequenter Strahlung durch die sogenannte Cutoff-Frequenz dar. Eine besonders vorteilhafte Ausgestaltung des erfindungsgemäßen Kraftfahrzeugradarsystems sieht vor, daß als Material für die elektrischen Leiterbahnen Resistherm verwendet wird. Resistherm hat den Vorteil, daß es neben seinen ferromagnetischen Eigenschafen in Bezug auf den elektrischen spezifischen Widerstand einen positiven Temperaturkoeffizienten aufweist und darüberhinaus als flexibles drahtförmiges Material erhältlich ist.

### Beschreibung von Ausführungsbeispielen

Im folgenden werden Ausführungsbeispiele des erfindungsgemäßen Kraftfahrzeugradarsystems anhand von Zeichnungen erläutert. Es zeigen:
- Figur 1: einen Querschnitt durch ein erfindungsgemäßes Kraftfahrzeugradarsystem,
- Figur 2: eine erste Ausführungsform einer erfindungsgemäßen Anordnung der elektrischen Leiterbahnen und
- Figur 3: eine zweite Ausführungsform einer Anordnung der elektrischen Leiterbahnen.

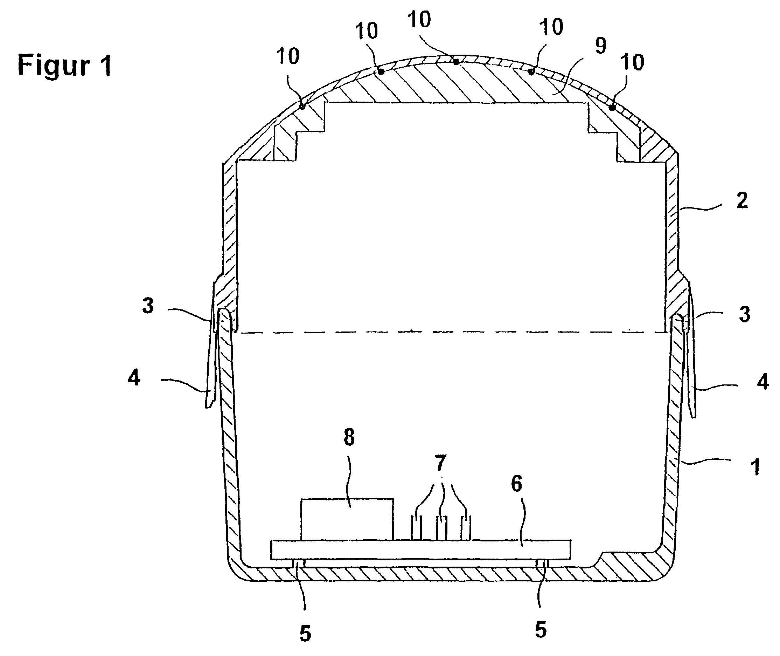

Figur 1 zeigt einen Querschnitt durch einen erfindungsgemäßes Kraftfahrzeugradarsystem. Das Kraftfahrzeugradarsystem, ist in dieser Darstellung nicht in allen Einzelheiten gezeigt. Die Darstellung nach Figur 1 wurde auf die für die Erfindung wesentlichen Komponenten reduziert. Das Kraftfahrzeugradarsystem besteht aus einem Gehäuseunterteil 1, das mit einem Gehäuseoberteil 2 durch eine Nut- und Federverbindung 3 verbunden ist. Die Nut- und Federverbindung 3 sorgt für eine luftdichte Verbindung zwischen dem Gehäuseunterteil 1 und dem Gehäuseoberteil 2 während Klipse 4 für eine gute mechanische Verbindung zwischen dem Gehäuseoberteil 2 und dem Gehäuseunterteil 1 sorgen. In dem Gehäuseunterteil 1 ist auf Sockeln 5 eine Basisplatte 6 eingebracht. Auf der Basisplatte befindet sich eine hier nicht dargestellte elektrische Leiterplatte, auf der Strahlerelemente 7 und Schaltungseinheiten 8 angeordnet sind. In diesem Ausführungsbeispiel sind 3 Strahlerelemente 7 dargestellt, die sowohl zum Senden als auch zum Empfang der Sensorstrahlung geeignet sind. Allgemein ist dabei eine beliebige Anzahl von Strahlerelementen 7 denkbar, wobei diese Strahlerelemente sowohl zum Senden als auch zum Empfangen als auch nur zum Senden oder nur zum Empfangen geeignet sein können. Im letztgenannten Fall kann auch eine Anordnung in zwei getrennten Gehäusen sinnvoll sein. In Hauptstrahlrichtung der Sensorstrahlung ist in das Gehäuseoberteil 2 eine dielektrische Linse 9 eingesetzt, in die elektrisch leitfähige Bahnen 10 aus einem ferromagnetischen Material eingelegt sind. In diesem Ausführungsbeispiel sind die elektrisch leitfähigen Bahnen 10 an der Oberfläche der dielektrischen Linse 9 angeordnet und sind von einer dünnen Schicht des Gehäuseoberteils 2 überzogen. Im allgemeinen ist es möglich, daß sich die elektrisch leitfähigen Bahnen 10 auf, innerhalb oder unterhalb der dielektrischen Linse befinden. Auch ist die Erfindung nicht auf die in Figur 1 gezeigte Anordnung der elektrischen Leiterbahnen 10 beschränkt, so daß auch eine Anordnung aus elektrisch leitfähigen Bahnen 10 beispielsweise in einer Ebene realisierbar ist.

Das in diesem Ausführungsbeispiel dargestellte Kraftfahrzeugradarsystem wird vorzugsweise im Rahmen eine= adaptiven Fahrgeschwindigkeitsregelung (z. B. Adaptive Cruise Control, ACC) eingesetzt. Hierbei kann das Kraftfahrzeugradarsystem beispielsweise nach dem FMCW-Verfahren arbeiten oder auch als Pulsradar ausgeführt sein.

Es liegt ebenfalls im Rahmen des erfindungsgemäßen Kraftfahrzeugradarsystems, daß eine dielektrische Linse mit eingelegten elektrischen Leiterbahnen selbst die äußere Schicht zur Umgebung bildet, so daß die dielektrische Linse nicht wie in Figur 1 gezeigt von einer Schicht des Gehäuseoberteils 2 überzogen ist. Im Rahmen des beschriebenen Ausführungsbeispiels wurde darauf verzichtet, die Kontaktierung der elektrisch leitfähigen Bahnen darzustellen. Über eine solche Kontaktierung wird den elektrisch leitfähigen Bahnen die entsprechende Leistung zugeführt. Die Steuerung kann hierbei beispielsweise von dem in Figur 1 dargestellten Steuergerät 8 bzw. der Schaltungseinheit 8 übernommen werden. Ebenfalls in diesem Ausführungsbeispiel nicht dargestellt ist die notwendige Kontaktierung des gesamten Kraftfahrzeugradarsystems zum übrigen Kraftfahrzeug. Eine solche Kontaktierung zum Rest des Kraftfahrzeugs kann an beliebiger Stelle des Kraftfahrzeugradarsystems angeordnet sein. Die Auswahl einer entsprechenden Kontaktstelle wird dem Fachmann überlassen.

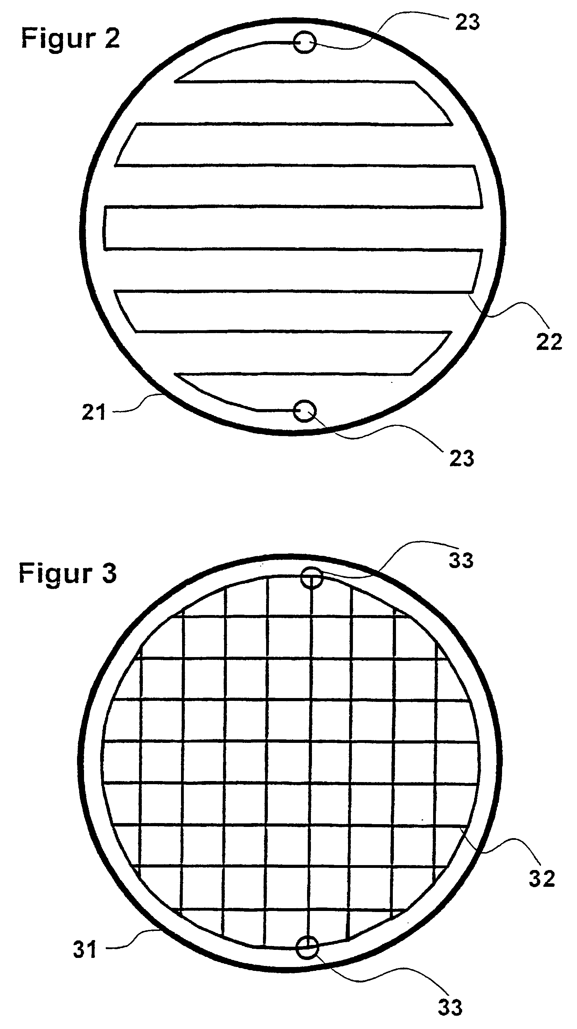

Figur 2 zeigt eine mögliche Anordnung elektrischer Leiterbahnen innerhalb eines Linsenkörpers. In den Linsenkörper 21, der hier in der Draufsicht dargestellt ist, ist eine elektrische Leiterbahn mäanderförmig eingelegt. Der Beginn und das Ende der elektrischen Leiterbahn 22 führen jeweils zu einer Durchführung 23 innerhalb des Linsenkörpers 21. Diese Durchführungen 23 dienen dazu, die elektrische Kontaktierung auf der Rückseite des Linsenkörpers 21 sicherzustellen. Hierbei sind selbstverständlich auch andere Formen der Kontaktierung möglich, beispielsweise eine über den Rand des Linsenkörpers 21 hinweageführte Kontaktierung. Bei der in Figur 2 dargestellten Auslegung der elektrischen Leiterbahnen 22 wird vorausgesetzt, daß die elektrischen Leiterbahnen einen Abstand von wenigstens Lambda-Viertel aufweisen, wobei Lambda die Freiraumwellenlänge der Sensorstrahlung ist. Weiterhin ist es erforderlich, daß die elektrischen Leiterbahnen eine Breite von maximal Lambda-Zehntel aufweisen. Durch diese beiden Auslegungskriterien wird gewährleistet, daß die mäanderförmig verlegte elektrische Leiterbahn für die Sensorstrahlung nahezu transparent erscheint und diese in ihrem Ausbreitungsverhalten nahezu nicht behindert. Erfindungsgemäß ist als Material für die elektrischen Leiterbahnen ein ferromagnetisches Material gewählt worden. In diesem Ausführungsbeispiel wurde hierzu das ferromagnetische Material Resistherm, das von den Isabellenhütten vertrieben wird, gewählt. Resistherm, das zu 0,6% aus Aluminium, zu 0,3% aus Chrom, zu 30% aus Eisen, zu 0,5% aus Mangan und aus einem geringen Restanteil Nickel besteht, ist ein ferromagnetischer Werkstoff, mit einer Permeabilitätszahl die viel viel größer ist, als 1. Trifft nun ein Magnetfeld auf die elektrisch leitfähigen Bahnen auf, so werden Spannungen induziert, die auch Ströme zur Folge haben. Diese Ströme erzeugen wiederum ein Magnetfeld, das dem äußeren Magnetfeld entgegengerichtet ist und dieses zum Großteil kompensiert. Auf diesem Effekt basiert die abschirmende Wirkung der elektrisch leitfähigen Bahnen, die aus einem ferromagnetischen Werkstoff bestehen. Dieser Effekt tritt in diesem Ausführungsbeispiel insbesondere bei niederfrequenten Feldern auf, die durch eine äquivalente Auslegung der elektrischen Leiterbahnen beispielsweise aus Kupfer nicht abschirmbar sind. Das verwendete Material Resistherm weist zudem ein positiven Temperaturkoeffizienten auf, wodurch sich bei steigenden Temperaturen der elektrische Widerstand der elektrischen Leiterbahnen erhöht. Dies führt in einem gewissen Rahmen zu einem Selbstschutz der elektrisch leitfähigen Bahnen und des dielektrischen Körpers 21, da eine zu hohe Temperatur des dielektrischen Körpers 21 zu dessen Zerstörung führen kann. Wenn sich nun durch eine Erwärmung der elektrischen Leiterbahnen und des dielektrischen Körpers der ohmsche Widerstand der elektrischen Leiterbahnen erhöht, nimmt automatisch der Stromfluß und somit die elektrische Leistung durch die elektrische Leiterbahnen ab. Durch diesen Selbstregeleffekt wird also in einem gewissen Rahmen die dielektrische Linse automatisch vor Überhitzung geschützt.

Erfindungsgemäß ist die hauptsächliche Aufgabe der elektrischen Leiterbahnen neben der Abschirmung das Heizen des sensorstrahlungsdurchlässigen Körpers und/oder des Radoms, wozu den elektrischen Leiterbahnen eine elektrische Leistung zugeführt wird. Neben diesen beiden Hauptfunktionen der Abschirmung und der Heizung können die elektrischen Leiterbahnen weitere Funktionalitäten aufweisen. Dies kann beispielsweise die Auslegung als Laufzeitleitung sein, um einen Selbsttest des Kraftfahrzeugradarsystems durchzuführen oder auch die Detektion von Belegen auf der Oberfläche des Kraftfahrzeugradarsystems durch Messung von Kapazitäten zwischen zwei ineinander verschachtelten elektrischen Leiterbahnen.

In diesem Ausführungsbeispiel sind die elektrischen Leiterbahnen in einem dielektrischen Körper bzw. in eine dielektrische Linse eingelegt. Im allgemeinen können die elektrischen Leiterbahnen jedoch in einen beliebigen sensorstrahlungsdurchlässigen Körper und/oder ein Radom eingelegt werden. In Bezugnahme auf die Darstellung nach Figur 1 können die Leiterbahnen beispielsweise derart ausgelegt werden, daß sie nicht in den dielektrischen Körper 9 eingelegt sind, sondern sich in einem darüber befindlichen Radom oder in diesem Fall der Deckschicht des oberen Gehäuseteils 2 befinden. Diese Auslegung bietet den Vorteil, daß der Linsenkörper 9, der den Strahlengang der Sensorstrahlung maßgeblich beeinflußt, besonders exakt und kostengünstig hergestellt werden kann, da der aufwendige Arbeitsgang des Einlegens der elektrisch leitfähigen Bahnen in den dielektrischen Körper entfällt.

Ein gattungsgemäßes Kraftfahrzeugradarsystem, das nach dem FMCW-Prinzip arbeitet, ist beispielsweise für eine Betriebsfrequenz von 77 Gigaherz ausgelegt. In diesem Frequenzbereich hat sich ein Durchmesser der elektrisch leitfähigen Bahnen von 0,2 mm und ein Abstand der elektrischen Leiterbahnen zueinander von 9 mm im Bezug sowohl auf die Funktionalität der Heizung als auch die Funktionalität der Abschirmung als besonders praktikabel und vorteilhaft herausgestellt.

Figur 3 zeigt eine weitere Ausgestaltungsform der Anordnung der elektrischen Leiterbahnen. In dem Ausführungsbeispiel nach Figur 3 sind in einem Linsenkörper 31 elektrische Leiterbahnen 32 gitterförmig eingelegt. Auch hier sind analog zur Darstellung nach Figur 2 Durchführungen 33 vorhanden, die zur Kontaktierung der elektrisch leitfähigen Bahnen dienen. Eine solche Anordnung als Gitternetz besitzt durch die sogenannte Cutoff-Frequenz eine besonders gute Abschirmwirkung im Bezug auf niedrige Frequenzen. Für den Fall, daß die Anordnung 32 ausschließlich als Abschirmung dienen soll, ist es notwendig, daß die Kontaktierungen 33 mit der Masse des Kraftfahrzeugradarsystems bzw. der Masse des Kraftfahrzeugs verbunden werden. Ein solches Gitter, wie es in Figur 3 dargestellt ist, kann einzeln in einen Linsenkörper eingelegt sein, aber auch in Kombination mit einer mäanderförmig eingelegten elektrischen Leiterbahn, wie sie in Figur 2 dargestellt ist. Eine solche kombinierte Anwendung hat den Vorteil, daß die mäanderförmige Leiterbahn zu Heizzwecken besonders gut geeignet ist, während die gitterförmige Struktur der elektrischen Leiterbahnen besonders gut zur Abschirmung geeignet ist. Die abschirmende Wirkung der Gitterstruktur der elektrischen Leiterbahnen 32 in Figur 3 stellt für sich betrachtet durch die Cutoff-Frequenz schon eine gute Abschirmung gegen niedrige Frequenzen dar. Wenn zusätzlich zu der gitterförmigen Struktur der elektrischen Leiterbahnen 32 ein ferromagnetisches Material wie beispielsweise Resistherm verwendet wird, wird die abschirmende Wirkung der Gitterstruktur gegenüber tieferfrequenter Strahlung noch einmal deutlich erhöht.

Die abschirmende Wirkung sowohl der elektrischen Leiterbahnen nach Figur 2 als auch der Gitterstruktur nach Figur 3 bezieht sich sowohl-auf Störstrahlung, die von außen in das Kraftfahrzeugradarsystem eindringt, als auch auf Störstrahlung, die aus dem Kraftfahrzeugradarsystem in die Umwelt austreten würde. Dieser letztgenannte Punkt ist insbesondere mit Blick auf rechtliche Bestimmungen zum Thema Elektrosmog von besonderer Bedeutung.

## Patentansprüche

1. Kraftfahrzeug-Radarsystem mit wenigstens einem sensorstrahlungsdurchlässigen Körper zur Fokussierung der Sensorstrahlung und/oder wenigstens einem Radom ohne gewollte Fokussierung im Strahlengang, wobei in den sensorstrahlungsdurchlässigen Körper und/oder in das Radom wenigstens eine Anordnung aus elektrischen Leiterbahnen eingelegt ist, **dadurch gekennzeichnet, daß** die Anordnung aus elektrischen Leiterbahnen aus einem ferromagnetischen Material besteht.

2. Kraftfahrzeug-Radarsystem nach Anspruch 1, **dadurch gekennzeichnet, daß** die Anordnung aus elektrischen Leiterbahnen wenigstens zum Heizen des sensorstrahlungsdurchlässigen Körpers und/oder des Radoms geeignet ist, wozu den elektrischen Leiterbahnen eine elektrische Leistung zuführbar ist.

3. Kraftfahrzeug-Radarsystem nach Anspruch 1, **dadurch gekennzeichnet, daß** der sensorstrahlungsdurchlässige Körper eine dielektrische Linse ist.

4. Kraftfahrzeug-Radarsystem nach Anspruch 1, **dadurch gekennzeichnet, daß** die elektrischen Leiterbahnen mäanderförmig in den sensorstrahlungsdurchlässigen Körper und/oder in das Radom eingelegt sind.

5. Kraftfahrzeug-Radarsystem nach Anspruch 1, **dadurch gekennzeichnet, daß** die elektrischen Leiterbahnen gitterförmig in den sensorstrahlungsdurchlässigen Körper und/oder in das Radom eingelegt sind.

6. Kraftfahrzeug-Radarsystem nach Anspruch 4 oder 5, **dadurch gekennzeichnet, daß** die elektrischen Leiterbahnen einen Abstand von wenigstens Lambda/4 zueinander aufweisen, wobei Lambda die Freiraumwellenlänge der Sensorstrahlung ist.

7. Kraftfahrzeug-Radarsystem nach Anspruch 4 oder 5, **dadurch gekennzeichnet, daß** die elektrischen Leiterbahnen eine Breite von maximal Lambda/10 aufweisen, wobei Lambda die Freiraumwellenlänge der Sensorstrahlung ist.

8. Kraftfahrzeug-Radarsystem nach Anspruch 1, **dadurch gekennzeichnet, daß** als Material für die elektrischen Leiterbahnen Resistherm verwendet wird.

## Claims

1. Motor vehicle radar system having at least one body, transparent to sensor radiation, for focusing the sensor radiation, and/or at least one radome without deliberate focusing in the beam path, at least one arrangement of electric conductor tracks being inserted into the body transparent to sensor radiation and/or into the radome, **characterized in that** the arrangement of electric conductor tracks consists of a ferromagnetic material.

2. Motor vehicle radar system according to Claim 1, **characterized in that** the arrangement of electric conductor tracks is suitable at least for heating the body transparent to sensor radiation and/or the radome, for which purpose the electric conductor tracks can be fed an electric power.

3. Motor vehicle radar system according to Claim 1, **characterized in that** the body transparent to sensor radiation is a dielectric lens.

4. Motor vehicle radar system according to Claim 1, **characterized in that** the electric conductor tracks are inserted in a meandering fashion into the body transparent to sensor radiation and/or into the radome.

5. Motor vehicle radar system according to Claim 1, **characterized in that** the electric conductor tracks are inserted in the form of a grating into the body transparent to sensor radiation and/or into the radome.

6. Motor vehicle radar system according to Claim 4 or 5, **characterized in that** the electric conductor tracks have a spacing of at least lambda/4 from one another, lambda being the free space wavelength of the sensor radiation.

7. Motor vehicle radar system according to Claim 4 or 5, **characterized in that** the electric conductor tracks have a width of at most lambda/10, lambda being the free space wavelength of the sensor radiation.

8. Motor vehicle radar system according to Claim 1, **characterized in that** Resistherm is used as material for the electric conductor tracks.

## Revendications

1. Système radar pour véhicule automobile comprenant au moins un corps perméable d'un capteur au rayonnement pour focaliser le rayonnement du capteur, et/ ou au moins un radôme sans focalisation voulue dans la trajectoire du faisceau, dans le corps perméable au rayonnement d'un capteur et/ ou dans le radôme au moins un ensemble de pistes conductrices électriques étant inséré,
**caractérisé en ce que**
l'ensemble de pistes conductrices électriques est réalisé à partir d'un matériau ferromagnétique.

2. Système radar pour véhicule automobile selon la revendication 1,
**caractérisé en ce que**
l'ensemble de pistes conductrices électriques est au moins apte à chauffer le corps perméable au rayonnement d'un capteur et/ ou le radôme, par une puissance électrique pouvant être fournie à cet effet aux pistes conductrices électriques.

3. Système radar pour véhicule automobile selon la revendication 1,
**caractérisé en ce que**
le corps perméable au rayonnement d'un capteur est une lentille diélectrique.

4. Système radar pour véhicule automobile selon la revendication 1,
**caractérisé en ce que**
les pistes conductrices électriques sont insérées sous forme de méandres dans le corps perméable au rayonnement d'un capteur ou dans le radôme.

5. Système radar pour véhicule automobile selon la revendication 1,
**caractérisé en ce que**
les pistes conductrices électriques sont insérées sous forme de grilles dans le corps perméable au rayonnement d'un capteur ou dans le radôme.

6. Système radar pour véhicule automobile selon la revendication 4 ou 5,
**caractérisé en ce que**
les pistes conductrices électriques présentent une distance les unes par rapport aux autres d'au moins lambda/4, lambda étant la longueur d'onde en espace libre du rayonnement de capteur.

7. Système radar pour véhicule automobile selon la revendication 4 ou 5,
**caractérisé en ce que**
les pistes conductrices électriques présentent une largeur maximale de lambda/10, lambda étant la longueur d'onde en espace libre du rayonnement de capteur.

8. Système radar pour véhicule automobile selon la revendication 1,
**caractérisé en ce que**
l'on utilise le résistherme comme matériau pour les pistes conductrices électriques.
